# EUROPÄISCHE PATENTSCHRIFT

(11) **EP 0 453 740 B1**
(45) Veröffentlichungstag und Bekanntmachung des Hinweises auf die Patenterteilung: **25.08.1993**
(21) Anmeldenummer: 91103493.2
(22) Anmeldetag: 07.03.1991
(51) Int. Cl.: B60R 21/20

(54) **Aufnahmevorrichtung für einen Luftsack**
Housing device for an airbag
Dispositif de logement pour sac à air

(30) Priorität: 04.04.1990 DE 4010766
(43) Veröffentlichungstag der Anmeldung: 30.10.1991
(73) Patentinhaber: MERCEDES-BENZ AG, 70327 Stuttgart (DE)
(72) Erfinder: Henseler, Wolfgang, W-7400 Tübingen (DE); Müller, Manfred, W-7301 Deizisau (DE); Katz, Egon, W-7270 Nagold 7 (DE); Wetzel, Guido, W-7030 Böblingen (DE); Brambilla, Luigi, Dr., W-7030 Böblingen (DE)

(56) Entgegenhaltungen:
- DE-A- 3 907 538
- US-A- 4 903 986
- PATENT ABSTRACTS OF JAPAN vol. 13, no. 369 (M-860)(3717) 16 August 1989;& JP-A-01 122754 (SEKISUI CHEM CO LTD) 16 Mai 1989

## Beschreibung

Die Erfindung betrifft eine Aufnahmevorrichtung für einen Luftsack nach dem Oberbegriff des Anspruchs 1. Eine derartige Konstruktion ist z.B. aus der US-A-4 903 986 bekannt.

In der US-PS 37 94 349 ist eine Abdeckung für einen Luftsack beschrieben, die an einer Grundplatte einer Armaturentafel festgelegt einen Luftsackbehälter überdeckt.

Die Abdeckung weist in einem unteren Randbereich durch eine schlitzartige Einkerbung im Abdeckungsprofil ein querverlaufendes Scharnier auf, um das die Abdeckung bei der Entfaltung des Luftsacks gegen den Fahrzeugboden wegzuklappen ist.

Der Luftsack, der durch einen Gasgenerator in Sekundenbruchteilen aufgebläht wird, drückt dabei mit großer Kraft gegen die Abdeckungsinnenseite, wodurch die Abdeckung aufkatapultiert wird, und das Luftsackgewebe mit großer Geschwindigkeit in Richtung auf einen Fahrzeuginsassen hervortritt.

Der Erfindung liegt die Aufgabe zugrunde, durch eine gattungsgemäße Abdeckung den Impuls eines Luftsacks bei seiner Entfaltung in Richtung auf einen Fahrzeuginsassen herabzusetzen.

Die Aufgabe wird durch die kennzeichnenden Merkmale des Anspruchs 1 gelöst.

Die seitlichen Abdeckungsklappen der Abdeckung öffnen bei der Entfaltung des Luftsacks aus den seitlichen Bereichen des Luftsackbehälters zuerst, wodurch der Luftsack bereits ein gewisses Füllvolumen erreicht hat, bevor die ganze Abdeckung von der Behälteröffnung wegklappt. Dadurch wird die Bewegung des Luftsacks im Mittenbereich gegenüber den Seitenbereichen verzögert. Der Entfaltungsimpuls des sich sehr schnell entfaltenden Luftsacks wird dadurch im Mittenbereich des Luftsacks abgeschwächt.

Dieser Öffnungsmechanismus kann alleine durch die Einfaltungsmethode des Luftsacks in den Luftsackbehälter gesteuert werden, es ist aber auch möglich, durch zusätzlich vorgesehene, steuertechnische Verbindungen der Abdeckung mit dem Auslösemechanismus des Gasgenerators einen derartigen Ablauf zu steuern.

Dabei können die Aufreißkanten um die seitlichen Abdeckungsklappen tiefer in das Abdeckungsmaterial eingearbeitet werden, als die Aufreißkante, die als letzte eine Schwenkbewegung der vollständigen Abdeckung freigibt, und/oder die Scharniere der schwenkbaren Abdeckung und der beiden seitlichen Abdeckungsklappen sind derart vorzusehen, daß die zuletzt wegschwenkbare Abdeckung im Scharnier einen höheren Widerstand gegen die Öffnungsbewegung aufweist, als die Scharniere der seitlichen Abdeckungsklappen. Dieser Widerstand kann durch einen auf der Abdeckungsinnenseite befestigten Einlagestreifen beeinflußt werden.

Wird der Luftsackbehälter mit der aufklappbaren Abdeckung in einem Lenkrad festgelegt, so ist es vorteilhaft, diese derart anzuordnen, daß sie nach der Entfaltung des Luftsacks nicht über den Lenkradkranz hervorragt.

Die Gegenstände weiterer Ansprüche bilden vorteilhafte Ausgestaltungsmöglichkeiten der Erfindung.

Ein Ausbildungsbeispiel der Erfindung ist in der Zeichnung dargestellt.

Es zeigen:

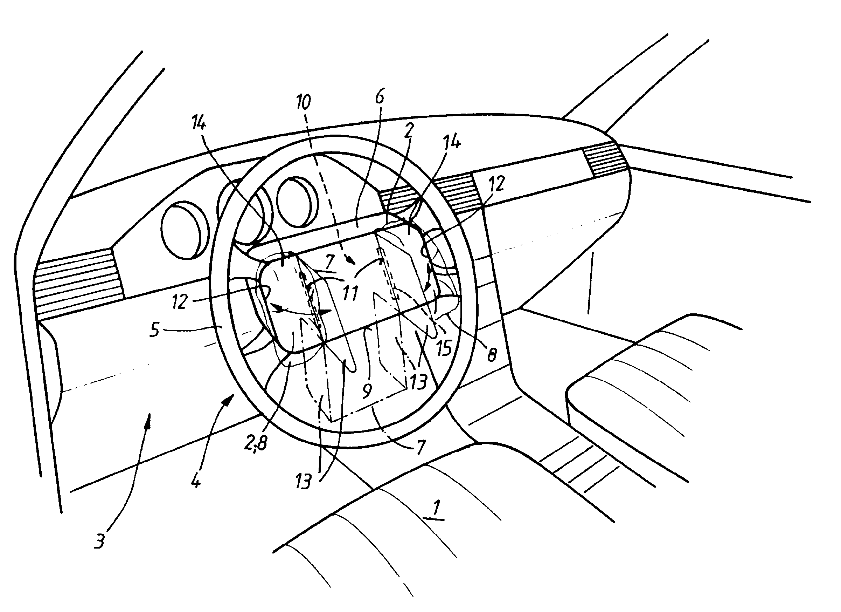

- Fig. 1: einen Ausschnitt des Innenraums eines Kraftwagens mit einem in einem Lenkrad angeordneten Luftsackbehälter, dessen Abdeckung dünn gezeichnet mit geöffneten seitlichen Abdeckungsklappen und strichpunktiert gezeichnet vollständig weggeklappt von der Behälteröffnung dargestellt ist, und
- Fig. 2 - 4: einen skizzierten Luftsackbehälter mit geschlossener Abdeckung, mit seitlich geöffneten Abdeckungsklappen und mit vollständig geöffneter Abdeckung, jeweils ohne Luftsack gezeichnet.

In einem Kraftwagen soll ein nicht dargestellter Fahrzeuginsasse, der auf einem Sitz 1 sitzen könnte, bei einem Unfall des Fahrzeugs durch einen sich entfaltenden Luftsack 2 vor einem Aufprallen auf Fahrzeuginnenraumteile 3 und in diesem Fall insbesondere auf ein Lenkrad 4 mit einem Lenkradkranz 5 geschützt werden.

Der Luftsack 2 ist in einen Luftsackbehälter 6 gefaltet eingelegt, welcher auf einer Lenkradnabe innerhalb des Lenkradkranzes 5 festgelegt ist.

Außerdem umfaßt diese Aufnahmevorrichtung für den Luftsack 2 eine flächige Abdeckung 7, die an einer Grundplatte festgelegt ist, welche hier durch den Luftsackbehälter 6 selbst gebildet ist, und die den Luftsackbehälter 6 über dem eingefalteten Luftsack 2 abdeckt.
Während der Entfaltung des Luftsacks 2 durch einen nicht näher dargestellten Gasgenerator 1 am Boden des Luftsackbehälters 6, durch den Gas in das Sackgewebe 8 einströmt, wird die Abdeckung 7 entlang einer Scharnierachse eines Scharniers 9 im unteren Randbereich aufgeklappt, wonach sie eine Behälteröffnung 10 für den Durchtritt des Sackgewebes 8 in eine aufgeblasene Position vor dem Fahrzeuginsassen freigibt.
Die Abdeckung 7 weist neben dem ersten Scharnier 9 noch zwei weitere, dazu etwa senkrechte Scharniere 11 auf, die von den seitlichen Rändern 12 der Abdeckung 7 einen Abstand aufweisen, wodurch zwei, die schwenkbare Abdeckung 7 unterteilende, seitliche Abdeckungsklappen 13 gebildet sind. Das Scharnier 9 der Abdeckung 7 wird durch diese zwei Abdeckungsklappen 13 begrenzt.

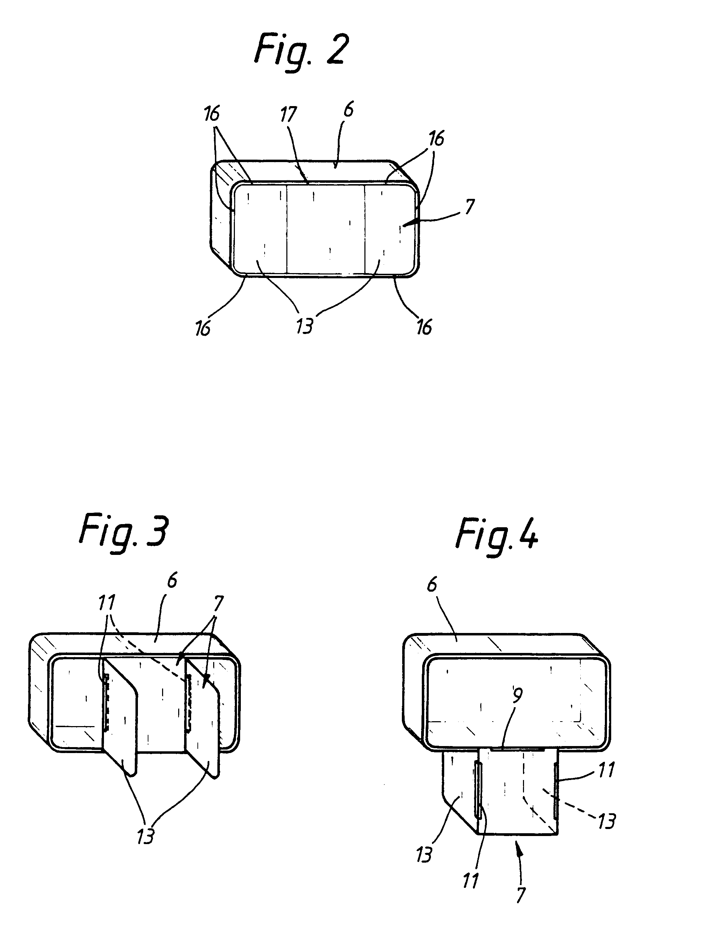

Mit diesen Abdeckungsklappen 13 ist ein Entfaltungsablauf des Luftsacks 2 gesteuert, während dem mehrere Faltlagen des Luftsacks 2, zuerst nur in seitlichen Bereichen 14 entfaltet werden und teilweise aus dem Luftsackbehälter 6 austreten, und erst danach die Abdeckung 7 durch den Druck des Luftsacks 2 auf die Abdeckungsinnenseite vollständig von der Behälteröffnung 10 weggeschwenkt wird. Dieser Öffnungsvorgang der Abdeckung ist in den Figuren 2 bis 4 fortlaufend skizziert. Dadurch, daß der mittlere Bereich des Luftsacks 2 gegenüber dessen seitlichen Bereichen also nur verzögert entfaltet und vor dem Fahrzeuginsassen gefüllt werden kann, wirkt der Entfaltungsimpuls im mittleren Luftsackbereich vermindert in Richtung auf den Fahrzeuginsassen.

Die seitlichen Abdeckungsklappen 13 werden durch die Belastung der Abdeckungsinnenseite mit dem sich entfaltenden Luftsack 2 entlang ihrer Aufreißkanten 16 geöffnet. Diese weisen einen geringeren Widerstand gegen ein Aufreißen als die querverlaufende Aufreißkante 17 auf. Die Öffnungskräfte der Aufreißkanten 16,17 können zum Beispiel in einfacher Weise durch unterschiedliche Einkerbtiefen an der Abdeckungsinnenseite oder Außenseite variiert und abgestimmt werden. Zusätzlich kann der Öffnungsmechanismus durch die Ausbildung der Scharniere 9,11 selbst beeinflußt werden, welche zum Beispiel eine gewisse Einkerbungstiefe auf der Innenseite des Abdekkungsprofils aufweisen, oder Einlagestreifen 15 ,zum Beispiel aus Gewebe, Aluminium oder Stahl beinhalten, die die Scharniere 9, 11 entlang ihrer Längsachse überbrücken, diese dabei verstärken und dabei auch den Widerstand gegen ein Aufklappen erhöhen können, wodurch die Öffnungsgeschwindigkeit der Klappen 7 bzw. 13 zu variieren ist. Diese Einlagestreifen 15 können auch in das Abdeckungsmaterial eingeschäumt werden, so daß die Klappen entlang ihrer vorgesehenen Scharnierachse aufbrechen, durch den Einlagestreifen 15 am Luftsackbehälter 6 gehalten werden, und durch die Einlagestreifen 15 in der Geschwindigkeit ihrer Aufklappbewegung beeinflußbar sind.

Um nach dem Wegklappen der Abdeckung 7 von der Behälteröffnung 10 keine über das Lenkrad 4 hervorstehenden Teile zu erhalten, ist die Abdeckung 7 derart angeordnet, daß sie in weggeklappter Öffnungsstellung innerhalb des Lenkradkranzes 5 liegt.

## Patentansprüche

1. Aufnahmevorrichtung für einen Luftsack (2), der einen Fahrzeuginsassen vor einem Aufprall auf Fahrzeuginnenraumteile schützt, mit einer rechteckförmigen Abdeckung (7), deren lange Rechteckseiten bei Geradeausfahrt in Fahrzeugquerrichtung ausgerichtet sind, und die an einer Grundplatte festgelegt einen Luftsackbehälter (6) abdeckt und während der Entfaltung des Luftsacks (2) entlang einer querliegenden Scharnierachse eines Scharniers im unteren Randbereich des Luftsackbehälters (6) aufklappt, wonach sie darüber eine Behälteröffnung (10) für den Durchtritt des Sackgewebes (8) in eine aufgeblasene Position vor dem Fahrzeuginsassen vollständig freigibt,
**dadurch gekennzeichnet,**
daß die Abdeckung (7) neben dem ersten unten querliegenden Scharnier (9) zwei weitere, dieses beidseitig begrenzende und dazu etwa senkrechte Scharniere (11) aufweist, die von den seitlichen Rändern (12) der Abdeckung (7) einen Abstand aufweisen, wodurch zwei die schwenkbare Abdeckung (7) unterteilende, seitliche Abdeckungsklappen (13) gebildet sind, und daß durch eine Belastung der Abdeckungsinnenseite mit dem sich entfaltenden Luftsack (2) zuerst die seitlichen Abdeckungsklappen (13), und anschließend die gesamte Abdeckung (7) um das unten querliegenden Scharnier (9), von der Behälteröffnung (10) wegzuschwenken sind.

2. Aufnahmevorrichtung nach Anspruch 1,
**dadurch gekennzeichnet,**
daß durch eine Belastung der Abdeckungsinnenseite mit dem sich entfaltenden Luftsack (2) Zuerst die seitlichen Abdeckungsklappen (13) und anschließend die gesamte Abdeckung (7) von der Behälteröffnung (10) wegzuschwenken sind.

3. Aufnahmevorrichtung nach Anspruch 2,
**dadurch gekennzeichnet,**
daß durch das Scharnier (9) der Abdeckung (7) ein höherer Aufklappwiderstand als durch die beiden Scharniere (11) der Abdeckungsklappen (13) gegeben ist.

4. Aufnahmevorrichtung nach einem der vorherstehenden Ansprüche,
**dadurch gekennzeichnet,**
daß das Scharnier (9 bzw. 11) durch linienförmige Einkerbungen im Abdeckungsprofil gebildet ist.

5. Aufnahmevorrichtung nach einem der vorherstehenden Ansprüche,
**dadurch gekennzeichnet,**
daß das Scharnier (9 bzw. 11) durch auf der Abdeckungsinnenseite befestigte Einlagestreifen (15) verstärkt ist.

6. Aufnahmevorrichtung nach Anspruch 5,
**dadurch gekennzeichnet,**
daß durch den Einlagestreifen (15) die Öffnungsgeschwindigkeit einer Klappe (7 bzw. 13) beeinflußbar ist.

7. Aufnahmevorrichtung nach Anspruch 1,
**dadurch gekennzeichnet,**
daß der Luftsackbehälter (6) in einem Lenkrad (4) festgelegt ist, derart, daß die Abdeckung (7) in weggeklappter Öffnungsstellung innerhalb eines Lenkradkranzes (5) liegt.

## Claims

1. Receptacle arrangement for an air bag (2) which protects a vehicle occupant from an impact onto parts of the vehicle interior, having a rectangular covering (7), the long rectangular sides of which are aligned in the transverse direction of the vehicle in straight-ahead travel, and which, fixed to a base plate, covers an air bag container (6) and folds out along a transverse hinge axis of a hinge in the lower edge region of the air bag container (6) during the unfolding of the air bag (2), after which it completely exposes a container aperture (10) above said edge region for the passage of the bag fabric (8) into an inflated position in front of the vehicle occupant, characterised in that the covering (7) has, in addition to the first bottom transverse hinge (9), two further hinges (11) which bound said first hinge on both sides, are approximately perpendicular thereto and have a clearance from the lateral edges (12) of the covering (7), by which means two lateral covering flaps (13) are formed which subdivide the swivellable covering (7), and in that firstly the lateral covering flaps (13) and subsequently the entire covering (7) can be swivelled back from the container aperture (10) about the bottom transverse hinge (9) due to a loading of the inside of the covering by the unfolding air bag (2).

2. Receptacle arrangement according to Claim 1, characterised in that firstly the lateral covering flaps (13) and subsequently the entire covering (7) can be swivelled back from the container aperture (10) due to a loading of the inside of the covering by the unfolding air bag (2).

3. Receptacle arrangement according to Claim 2, characterised in that a higher resistance to folding out is provided by the hinge (9) of the covering (7) than by the two hinges (11) of the covering flaps (13).

4. Receptacle arrangement according to one of the preceding claims, characterised in that the hinge (9 or 11) is formed by linear notchings in the covering profile.

5. Receptacle arrangement according to one of the preceding claims, characterised in that the hinge (9 or 11) is strengthened by insert strips (15) attached to the inside of the covering.

6. Receptacle arrangement according to Claim 5, characterised in that the opening speed of a flap (7 or 13) can be influenced by the insert strip (15).

7. Receptacle arrangement according to Claim 1, characterised in that the air bag container (6) is fixed in a steering wheel (4) in such a way that the covering (7) lies within a steering wheel rim (5) in the folded-back opened position.

## Revendications

1. Dispositif de logement pour sac à air (2), protégeant un passager contre un choc sur les parties de l'habitacle du véhicule, avec un recouvrement (7) rectangulaire, dont les côtés longs du rectangle sont orientés transversalement par rapport à la direction du véhicule lorsqu'on roule en ligne droite et recouvrant un récipient à sac à air (6), en étant fixé sur une plaque de base et qui, pendant le déploiement du sac à air (2), s'ouvre par rabattement le long d'un axe de charnière transversal, dans la zone de bordure inférieure du récipient de sac à air (6), puis libère entièrement une ouverture de récipient (10), donnant passage à la structure de sac (8), en une position gonflée, devant les passagers, caractérisé en ce que le recouvrement (7) présente, outre la première charnière (9) située transversalement et au-dessous, deux autres charnières (11), assurant une limitation sur les deux côtés, à peu près perpendiculaire à la première charnière (9) et présentant un espacement, par rapport aux bordures latérales (12) du recouvrement (7), faisant que sont formés deux volets de recouvrement latéraux (13), subdivisant le recouvrement pivotant (7) et que, suite à une sollicitation de la face intérieure du recouvrement par le sac à air (2) qui se déploie, il se produit d'abord un écartement par rapport à l'ouverture de récipient (10), par pivotement des volets de recouvrement latéraux (13) et ensuite de l'ensemble du recouvrement (7), autour de la charnière (9) située transversalement au-dessous.

2. Dispositif de logement selon la revendication 1, caractérisé en ce que, par une sollicitation de la face intérieure de recouvrement, par le sac à air (2) en train de se déployer, se produit d'abord un écartement, par rapport à l'ouverture de récipient (10), par pivotement des volets de recouvrement (13) latéraux, puis de l'ensemble du recouvrement (7).

3. Dispositif de logement selon la revendication 2, caractérisé en ce que la charnière (9) du recouvrement (7) offre une résistance à l'ouverture par rabattement plus élevée que le font les deux charnières (11) des volets de recouvrement (13).

4. Dispositif de logement selon l'une des revendications précédentes, caractérisé en ce que la charnière (9, respectivement 11) est formée par des entailles linéaires formées dans le profil de recouvrement.

5. Dispositif de logement selon l'une des revendications précédentes, caractérisé en ce que la charnière (9 respectivement 11) est renforcée par des bandes de garnitures (15) fixées sur la face intérieure du recouvrement.

6. Dispositif de logement selon la revendication 5, caractérisé en ce que la vitesse d'ouverture d'un volet (7 respectivement 13) peut être influencée au moyen des bandes de garnitures (15).

7. Dispositif de logement selon la revendication 1, caractérisé en ce que le récipient à sac (6) est fixé dans un volant (4), de telle façon que le recouvrement (7) est situé à l'intérieur de l'arceau de volant (5), lorsque le recouvrement (7) est dans la position écartée par ouverture.
